# EUROPÄISCHE PATENTSCHRIFT

(11) **EP 0 915 400 B1**
(45) Veröffentlichungstag und Bekanntmachung des Hinweises auf die Patenterteilung: **04.02.2004**
(21) Anmeldenummer: 98120948.9
(22) Anmeldetag: 04.11.1998
(51) Int. Cl.: G05B 19/042, G05B 19/418

(54) **Periphere Steuereinheit für ein Prozessleitsystem**
Peripheral control unit for a process control system
Unité de commande pour un système de régulation de processus

(30) Priorität: 06.11.1997 DE 19749131
(43) Veröffentlichungstag der Anmeldung: 12.05.1999
(73) Patentinhaber: SIEMENS AKTIENGESELLSCHAFT, 80333 München (DE)
(72) Erfinder: Baumann, Erich, 89438 Holzheim (DE)

(56) Entgegenhaltungen:
- EP-A- 0 155 213
- EP-A- 0 276 937
- EP-A- 0 754 991
- EP-A- 0 825 502
- DE-A- 19 549 154
- US-A- 4 780 631
- US-A- 4 935 863
- US-A- 5 233 511
- US-A- 5 472 347

## Beschreibung

Die Erfindung bezieht sich auf eine periphere Steuereinheit für ein Prozeßleitsystem gemäß dem Oberbegriff des Patentanspruchs 1.

Prozeßleitsysteme für komplexe Prozeßabläufe, wie sie beispielsweise in Kraftwerken auftreten, sind nach folgendem Schema strukturiert. Die Prozeßführung wird von einem sogenannten Prozeßführungs- und -informationssystem gesteuert, wobei auch eine Bedien- und Beobachtungsebene für das Wartenpersonal in einer Leitzentrale vorgesehen ist. Über ein Bussystem kommuniziert das Prozeßführungs- und-informationssystem mit einem Automatisierungssystem. Dieses erfaßt Meßwerte und Zustände aus dem Prozeß, führt Steuerungs- und Regelfunktionen durch und leitet die sich daraus ergebenden Befehle an den Prozeß weiter. Das Automatisierungssystem dient als Schnittstelle zum verfahrenstechnischen Prozeß, indem Befehle aus dem Prozeßführungs- und-informationssystem an den Prozeß übertragen werden und Informationen, die das Prozeßführungs- und -informationssystem aus dem Prozeß benötigt, eingelesen und auf die Bedien- und Beobachtungsebene weitergegeben werden. Das Automatisierungssystem erfaßt auf der untersten Feldebene mittels Sensoren analoge und binäre Größen aus dem Prozeß, verarbeitet diese Informationen anwendungsbezogen in Regelungs- und Steuerungsalgorithmen und gibt Befehle an Aktoren (Motoren, Ventile usw.). Kernstück des Automatisierungssystems ist ein Automatisierungsprozessor. Der Automatisierungsprozessor führt die Automatisierungsaufgaben Steuerung, Regelung und Schutz durch. Die Kommunikation zum Prozeß erfolgt durch Baugruppen, an welche die peripheren Steuerelemente, also Sensoren und Aktoren angeschlossen sind. Die Baugruppen können dabei entweder zentral als Funktionsmodul oder dezentral in unmittelbarer Nähe der Feldgeräte als Signalmodul angeordnet werden.

Aus der Siemens-Informationsschrift: Teleperm XP, Das Prozeßleitsystem für wirtschaftlichste Kraftwerksführung, 1996, S. 17-19 sind beispielsweise sowohl Funktionsmodule mit einer aufwendigen Binärsignalgeberüberwachung als auch Antriebssteuerbaugruppen bekannt, die ein Stellglied bei einer Drehmomentanforderung absteuern. Bei Umrüstungen der Leittechnik oder bei beengten Platzverhältnissen sind dezentral gesteuerte Leitsysteme den zentral gesteuerten überlegen. Daher sind Signalmodule für eine dezentrale Steuerung bekannt a.a.O, S.20, die die Stellbefehle an die peripheren Steuerelemente weiterleiten und Prozeßdaten von den peripheren Steuerelementen aufnehmen und an den Automatisierungsprozessor weiterleiten. Diese Signalmodule sind aufgrund einer erwünschten flexiblen Anwendung bei unterschiedlichsten Aktoren so ausgelegt, daß sie keine besondere Überwachung der Leitungen auf Drahtbruch oder Kurzschluß aufweisen und für die höheren Sicherheitsanforderungen, beispielsweise in Kernkraftwerken, nicht geeignet sind.

Aus DE 195 49 154 ist eine Steuereinheit für einen einzelnen Verbraucher bekannt, die eine Laststeuereinrichtung, eine Kommunikationseinrichtung, eine Sensor-Kommunikationseinrichtung, eine Meß-Steuer-Regeleinrichtung, eine Datenspeichereinrichtung und eine Diagnoseeinrichtung aufweist. Diese Steuereinheit ist jeweils individuell auf zu steuernde Geräte, beispielsweise Antriebsmotoren, ausgelegt. Die spezielle Ausrichtung der gesamten Steuereinheit auf das jeweilige Anwendungsgebiet erfordert für unterschiedliche zu steuernde Geräte einen hohen Aufwand.

Aus der Druckschrift US 4,935,863 ist eine periphere Steuereinheit mit einem dezentralen Signalmodul bekannt, die über eine Konsole konfiguriert und bedient werden kann.

Es ist daher die Aufgabe der Erfindung periphere Steuereinheiten anzugeben, mit denen ein dezentral organisiertes Leitsystem mit Signalmodulen die Fehlersicherheit eines zentral organisierten Leitsystems mit Funktionsmodulen aufweist.

Die Aufgabe wird erfindungsgemäß durch periphere Steuereinheiten der eingangs genannten Art mit den kennzeichnenden Merkmalen des Patentanspruchs 1 gelöst.

Die peripheren Steuereinheiten weisen dabei Anpaßelemente auf, die über ein Leitungssystem mit den Signalmodulen und den peripheren Steuerelementen verbunden sind. Durch eine gegenüber dem Prozeßleitsystem separate Stromversorgung sind die Anpaßelemente in der Lage, für die zugeordneten peripheren Steuerelemente eine aufwendige Überwachung mit Überwachungseinrichtungen zu gewährleisten, die durch Anzeigevorrichtungen für die Funktionsüberprüfung angezeigt werden.

In der bevorzugten Ausgestaltung nach Patentanspruch 2 wird das Leitungsssystem durch Spannungsüberwachungseinrichtungen im Anpaßelement auf anliegende Spannung überwacht.

Nach Patentanspruch 3 sind in vorteilhafter Weise im Anpaßelement Stromüberwachungseinrichtungen angeordnet, um das Leitungssystem auf Stromfluß zu überwachen.

In der Ausgestaltung nach Patentanspruch 4 sind die Anzeigevorrichtungen besonders preiswert als rote und/oder grüne Leuchtdioden ausgebildet.

Nach Patentanspruch 5 ist in vorteilhafter Weise ein Anschlußblock vorgesehen, auf dem mehrere Anpaßelemente befestigt und zusammen mit Strom versorgt werden.

Für eine einfache Montage sind die die Anpaßelemente nach Anspruch 6 auf dem Anschlußblock steckbar befestigt.

In der bevorzugten Ausgestaltung für ein Anpaßelement für einen Binärsignalgeber nach Anpruch 7 ist eine Stromversorgung des Binärsignalgebers mit einer erhöhten Spannung (vorzugsweise 48 V) sichergestellt.

In der Ausgestaltung nach Anspruch 8 ist in vorteilhafter Weise ein Anpaßelement für einen Stellantrieb offenbart, mit dem der Stellantrieb im Fehlerfall schneller abgesteurt wird, als wenn der Befehl vom Automatisierungsprozessor käme.

Nach Patentanspruch 9 ist in vorteilhafter Weise eine schnelle Absteuerung einer Antriebssteuerung vorgesehen, wenn die Spannung zum Betrieb der Antriebssteuerung schwankt.

In vorteilhafter Weise weist ein Anpaßelement zur Stromversorgung nach Anspruch 10 Anschlüsse für eine externe Stromversorgungseinrichtung auf und liefert die Spannungen an die Leitungen des Anschlußblocks, über den sie an weitere Anpaßelemente verteilt werden.

Anhand von Ausführungsbeispielen wird die Erfindung in der Zeichnung erläutert. Dabei zeigen
Figur 1 eine schematische Darstellung des Prozeßleitsystems
Figur 2 eine schematische Darstellung des Anschlußblocks,
Figur 3 einen schematischen Aufbau eines Anpaßelementes zur Stromversorgung und Überwachung
Figur 4 einen schematischen Aufbau eines Anpaßelementes zur Stromversorgung und Absicherung eines Binärsignalgebers
Figur 5 einen schematischen Aufbau eines Anpaßelementes zum Ansteuern eines Stellantriebs
Figur 6 einen schematischen Aufbau eines Anpaßelementes zur Antriebssteuerung
Figur 7 einen schematischen Aufbau eines Anpaßelementes zur Ansteuerung eines Analoggebers
und Figur 8 einen schematischen Aufbau eines Anpaßelementes zur Steuerung eines Magnetventils und einen schematischen Aufbau eines Anpaßelementes zur Aufnahme von Rückmeldungen eines Magnetventils.

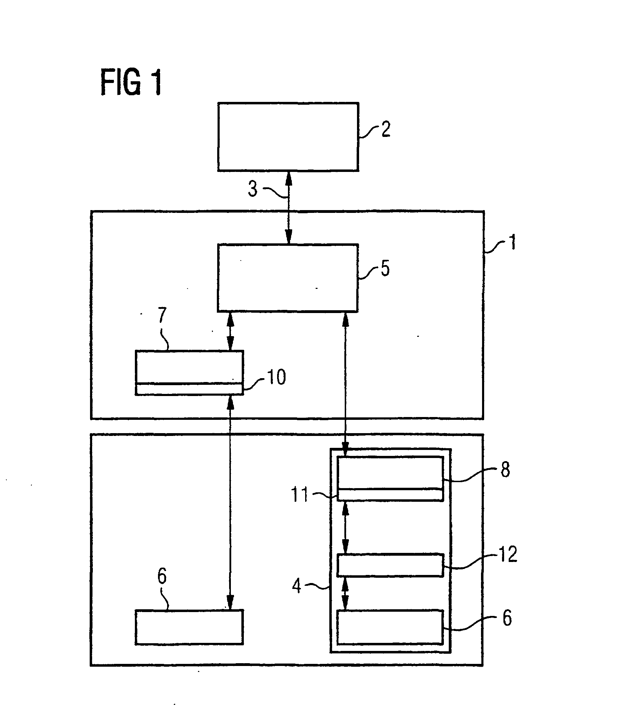

In Figur 1 ist der prinzipielle Aufbau eines Automatisierungssystems 1 dargestellt. Die Prozeßführung wird dabei von einem nicht detailliert dargestellten Prozeßführungs- und-informationssystem 2 gesteuert, wobei auch eine Bedien- und Beobachtungsebene für das Wartenpersonal in einer Leitzentrale vorgesehen ist. Über ein Bussystem 3 kommuniziert das Prozeßführungs- und -informationssystem 2 mit dem Automatisierungssystem 1, welches die Aufgaben der Gruppen- und Einzelleitebene ausführt. Es erfaßt Meßwerte und Zustände aus dem Prozeß, führt Steuerungs- und Regelfunktionen durch und leitet die sich daraus ergebenden Befehle an den Prozeß weiter. Das Automatisierungssystem 1 dient als Schnittstelle zum verfahrenstechnischen Prozeß, indem Befehle aus dem Prozeßführungs- und -informationssystem 2 an den Prozeß übertragen werden und Informationen, die das Prozeßführungs- und-informationssystem 2 aus dem Prozeß benötigt, eingelesen und auf die Bedien- und Beobachtungsebene weitergegeben werden. Das Automatisierungssystem 1 erfaßt auf der untersten Feldebene mit peripheren Steuereinheiten 4 mittels Sensoren als periphere Steuerelemente 6 analoge und binäre Größen aus dem Prozeß, verarbeitet diese Informationen anwendungsbezogen in Regelungs- und Steuerungsalgorithmen und gibt Befehle an Aktoren (Motoren, Ventile usw.) als periphere Steuerelemente 6. Kernstück des Automatisierungssystems 1 ist ein Automatisierungsprozessor 5. Der Automatisierungsprozessor 5 führt die Automatisierungsaufgaben Steuerung, Regelung und Schutz durch. Die Kommunikation zum Prozeß erfolgt durch Baugruppen, an welche die peripheren Steuerelemente 6, also Sensoren und Aktoren angeschlossen sind. Die Baugruppen können dabei entweder zentral als Funktionsmodul 7 oder dezentral in unmittelbarer Nähe der peripheren Steuerelemente 6 als Signalmodul 8 angeordnet werden. Ein- Ausgabebaugruppen 10 der Funktionsmodule 7 bzw. Ein-Ausgabebaugruppen 11 der Signalmodule 8 sorgen dabei für die Kommunikation mit den peripheren Steuerelementen 6.

Die Signalmodule 8 sind dabei aus Gründen der Kostenersparnis so ausgelegt, daß sie einen Großteil der Aufgaben erfüllen können, ohne für spezifische Aufgaben ausgerüstet zu sein.

Für die Lösung von solchen spezifischen Aufgaben, vor allem für höhere Sicherheitsanforderungen in Kraftwerken, werden erfindungsgemäß Anpaßelemente 12 angegeben, die zwischen dem Signalmodul 8 und den peripheren Steuerelementen 6 angeordnet werden. Auch der Funktionsumfang von zentralenseitig angeordneten Signalmodulen 8 wird durch das Anbringen von Anpaßelementen 12 auf den Funktionsumfang von Funktionsmodulen 7 erhöht.

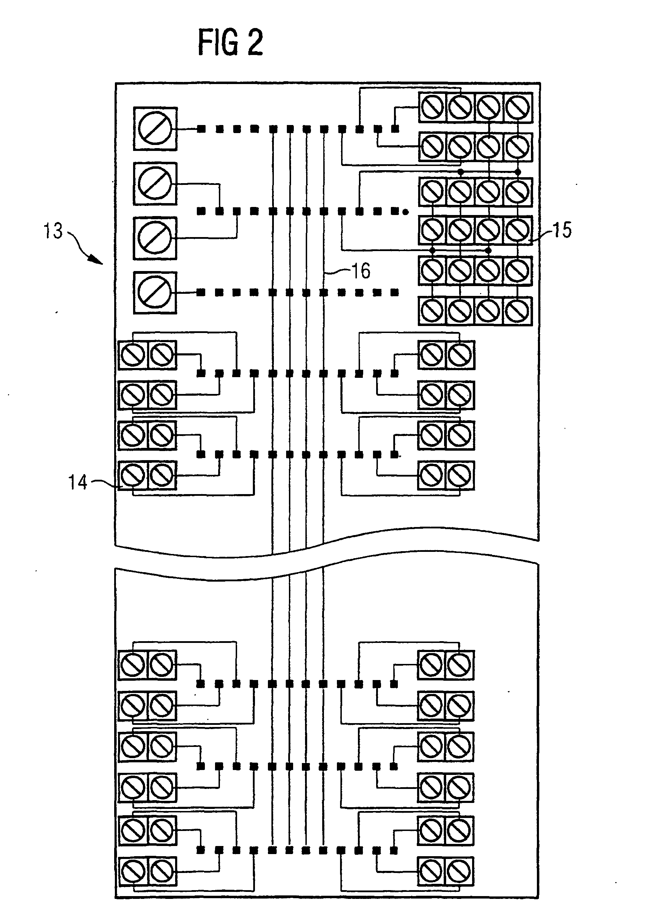

In Figur 2 ist dafür ein schematisch ein Anschlußblock 13 dargestellt, auf dem die einzelnen Anpaßelemente 12 montiert werden. Die Verbindung zu den peripheren Steuerelementen 6 erfolgt über erste Verbindungseinrichtungen 14 und die Verhindung zu den Ein-Ausgabebaugruppen 11 der Signalmodule 8 über zweite Verbindungseinrichtungen 15. Auf dem Anschlußblock 13 können mehrere Anpaßelemente 12 montiert werden. Damit alle Anpaßelemente 12 mit Strom versorgt werden, sind auf dem Anschlußblock 13 durchgehende Leitungen 16 angeordnet, die die einzelnen Anpaßelemente 12 untereinander verbinden.

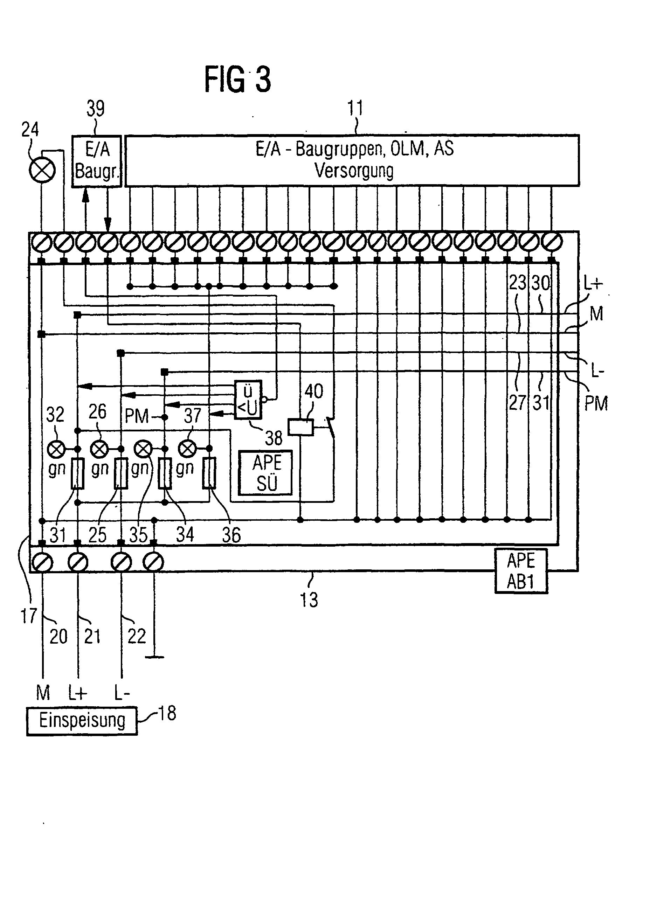

Zur Stromversorgung der Anpaßelemente 12 auf dem Anschlußblock 13 dient ein Anpaßelement 17 zur Stromversorgung, wie es in Figur 3 dargestellt ist. Dabei wird dieses Anpaßelement 17 von einer externen Stromversorgungseinrichtung 18 mit Masse 20, einer gegenüber Masse positiven Gleichspannung 21 und einer gegenüber der Masse negativen Gleichspannung 22 versorgt. Der Masseanschluß 20 ist dabei geerdet. Der Masseanschluß 20 ist über Leitungen im Anpaßelement 17 zur Stromversorgung mit der Masseleitung 23 des Anschlußblocks 13, mit dem Masseanschluß einer Schrankleuchte 24 und mit den Masseanschlüssen von in diesem Beispiel acht Ein-Ausgabebaugruppen 11 der Signalmodule 8 verbunden. Der Anschluß 22 für die negative Gleichspannung ist über Leitungen im Anpaßelement 17 über eine erste Sicherung 25 und eine erste grüne Leuchtdiode 26 mit der Leitung 27 für die negative Gleichspannung des Anschlußblocks 13 verbunden. Der Anschluß 21 der positiven Gleichspannung ist über eine zweite Sicherung 31 und eine zweite grüne Leuchtdiode 32 mit der Leitung 30 für die positive Gleichspannung auf dem Anschlußblock 13, über eine dritte Sicherung 34 und eine dritte grüne Leuchtdiode 35 mit einer Leitung 33 für die Stromversorgung der Uberwachungselektronik in den Anpaßelementen 12 und über eine vierte Sicherung 36 und eine vierte grüne Leuchtdiode 37 mit dem Anschluß für positive Gleichspannung der in diesem Beispiel acht Ein-Ausgabebaugruppen 8 verbunden. Zusätzlich werden die drei Leitungen der positiven Gleichspannung und die eine Leitung der negativen Gleichspannung auf ihren Spannungswert durch eine erste Spannungsüberwachungseinrichtung 38 überprüft. Sind die Spannungen im Fehlerfall zu klein, wird über die erste Spannungsüberwachungseinrichtung 38 ein Signal an eine spezielle Ein-Ausgabebaugruppe 39 gelegt, welche über ein Relais 40 die Schranklampe 24 mit Spannung versorgt, die dadurch aufleuchtet.

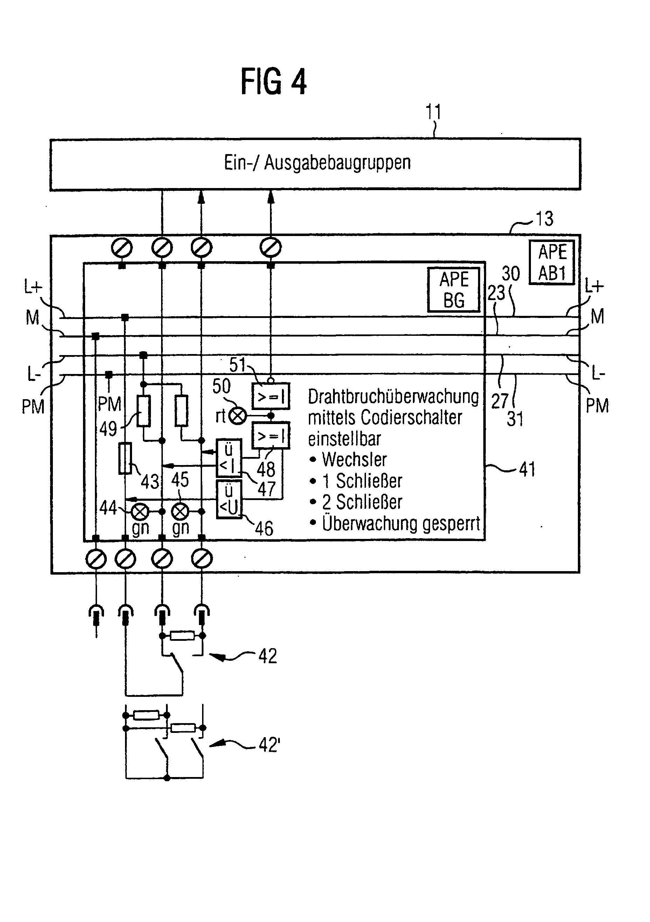

Bei einem Anpaßelement 41 für Binärsignalgeber 42, 42', wie es in Figur 4 dargestellt ist, werden die Binärsignalgeber 42 mit einer erhöhten Schaltspannung von 48 V betrieben. Dafür wird ein Anschluß eines Binärsignalgebers mit der Leitung 30 für die positive Gleichspannung (in diesem Fall 24 V) verbunden und der andere Anschluß mit der Leitung 27 für die negative Gleichspannung (in diesem Fall -24 V). Mit einem nicht dargestellten Codierschalter läßt sich der Typ des zu überwachenden Binärsignalgebers angeben: ein Wechsler 42, ein 1-Schließer oder ein 2-Schließer 42', oder auch ein Verzicht auf die Überwachung bei unkritischen Binärsignalgebervarianten. Die Verbindungsleitung des Binärsignalgebers 42 mit der Leitung 30 für positive Gleichspannung wird über eine fünfte Sicherung 43 überwacht. Die beiden Verbindungsleitungen zwischen dem Binärsignalgeber 42 und der Leitung 27 für die negative Gleichspannung werden mit einer fünften und einer sechsten grünen Leuchtdiode 44,45 überwacht. Zusätzlich wird die Verbindungsleitung zwischen dem Binärsignalgeber 42 und der Leitung 30 für die positive Gleichspannung auf die anliegende Spannung mit einer zweiten Spannungsüberwachungseinrichtung 46 und die Verbindungsleitungen zwischen Binärsignalgeber 42 und der Leitung 27 mit der negativen Gleichspannung auf den fließenden Strom mittels einer ersten Stromüberwachungseinrichtung 47 überwacht. Die Ausgänge der zweiten Spannungsüberwachungseinrichtung 46 und der ersten Stromüberwachungseinrichtung 47 sind mit einem ersten Oder-Glied 48 verknüpft, dessen Ausgang mit einer ersten roten Leuchtdiode 50, die im Fehlerfall aufleuchtet, verbunden ist sowie über ein erstes Invertierglied 51 mit der dem Binärsignalgeber 42 zugeordneten Ein-Ausgabebaugruppe 8. Im Fehlerfäll wird daber eine logische 0 und im fehlerfreien Fall eine logische 1 an die Ein-Ausgabebaugruppe 8 übertragen. Dadurch ist eine Überwachung des Binärsignalgebers 42 auf Drahtbruch und Kurzschluß sowie eine erhöhte Schaltspannung auf 48 V gewährleistet.

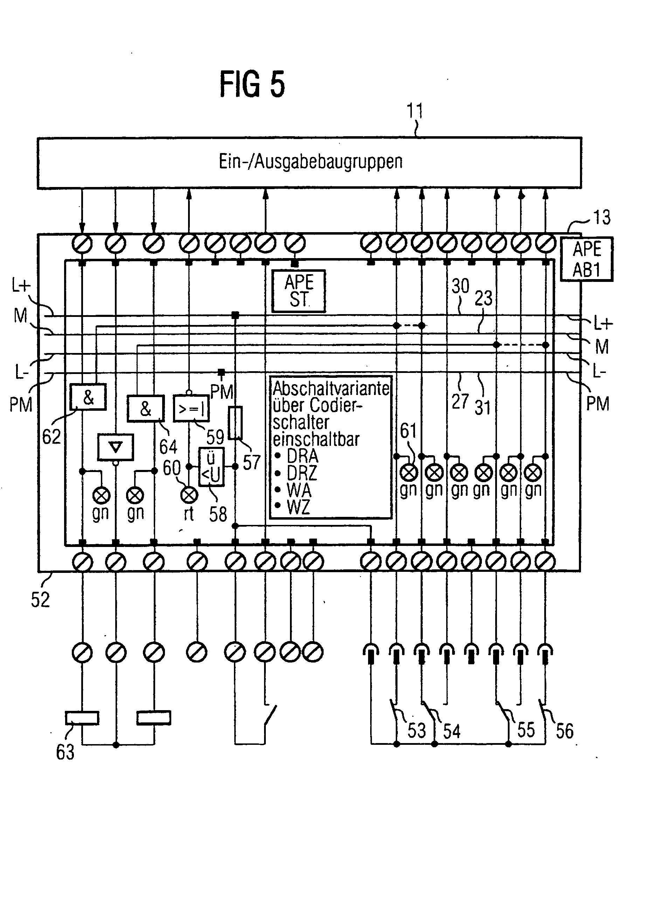

Beim Anpaßelement 52 für Stellantriebe nach Figur 5 wird ein schnelleres Absteuern eines Stellantriebs und eine Überwachung der Kontaktversorgung erzielt. Dabei wird die Stromversorgung der Kontaktschalter 53,54,55,56 mit einer sechsten Sicherung 57 überwacht und mit einer dritten Spannungsüberwachungseinrichtung 58 auf Unterspannung überprüft, die bei gegebener Unterspannung über eine zweite rote Leuchtdiode 60 zur Anzeige der Unterspannung eine logische 0 an die Ein-Ausgabebaugruppe 8 liefert. Die Kontaktschalter 53,54,55,56 werden über weitere grüne Leuchtdioden 61, die die Kontaktschalterstellung anzeigen, überwacht und sind mit den Ein-Ausgabebaugruppen 8 verbunden. Bei einer manuellen oder automatischen Betätigung der Kontaktschalter 53,54,55,56 am peripheren Steuerelement wird eine logische 0 an ein erstes Und-Glied 62 gelegt und ein damit verbundenes erstes Kopplerrelais 63 bewirkt eine Absteuerung des Stellantriebs. In Abhängigkeit von der gewählten Abschaltvariante werden Verbindungen zu einem ersten oder zweiten Und-Glied 62,64 geschaltet und darüber das entsprechende Kopplerrelais 63. Je nach Regler kann die Abschaltvariante wegabhängig auf (Kontaktschalter 55), wegabhängig zu (Kontaktschalter 54), drehmomentabhängig auf (Kontaktschalter 56) oder drehmomentabhängig zu (Kontaktschalter 57) sein. Über die Ein-Ausgabebaugruppe 8 erhält auch der Automatisierungsprozessor 5 die Information über die Abschaltung und regelt die Steuerung nach.

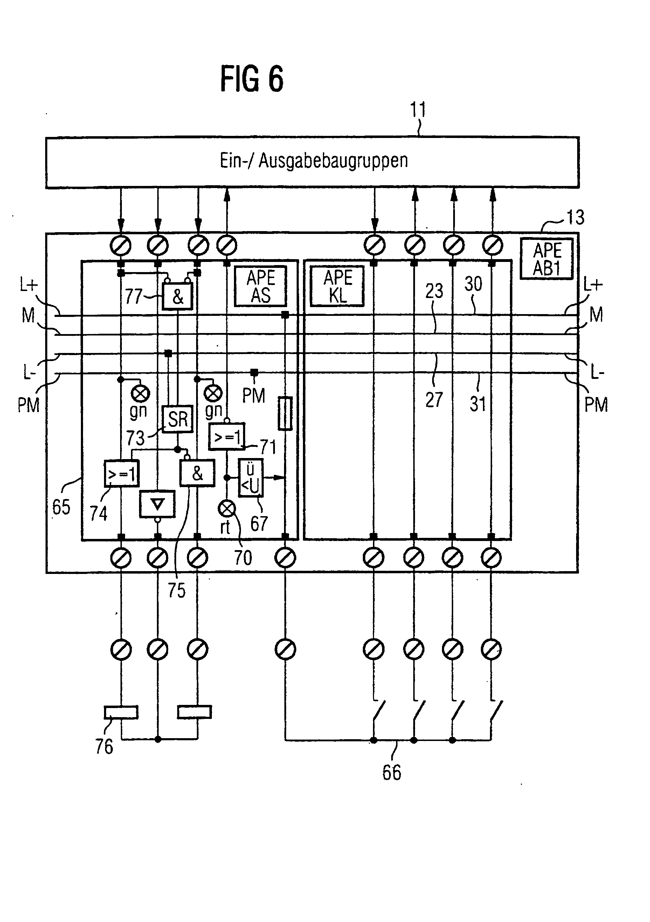

Beim Anpaßelement 65 für Antriebssteuerungen nach Figur 6 werden Kontakte 66 der Antriebssteuerung mit Strom versorgt und abgesichert, in dem die Stromversorgung durch eine vierte Spannungsüberwachungseinrichtung 67 auf Unterspannung geprüft wird, die im Fehlerfall über eine drittr rote Leuchtdiode 70 zur Fehleranzeige und ein zweites Invertierglied 71 eine logische 0 an die Ein-Ausgabebaugruppe 8 liefert. Beim Schalten großer Leistungen kann ein Schwanken der Spannung zum unerwünschten Ein- und Ausschalten der Kontakte 66 und damit zum Verschweißen der Kontakte 66 führen. Falls eine zu geringe Spannung (Unterspannung) detektiert wird, wird dieses Signal über eine bistabile Kippstufe 73 als logische 1 an ein drittes Oder-Glied 74 und ein drittes Und-Glied 75 so gelegt, daß das damit verbundene zweite Kopplerrelais 76 umschaltet und damit den Antrieb abschaltet. Die Information der anliegenden Unterspannung wird an die Ein-Ausgabebaugruppe 8 beispielsweise mit dem Anpaßelement 17 zur Stromversorgung geliefert. Nachdem der Automatisierungsprozessor 5 von der Abschaltung erfahren hat, wird mit zweimal logisch 0 von der Ein-Ausgabeeinheit 8 über die invertierenden Eingänge eines vierten Und-Gliedes 77 eine logische 1 an den Rücksetzeingang der bistabilen Kippstufe 73 gelegt und damit wieder der ursprüngliche Schaltzustand des zweiten Kopplerrelais 76 hergestellt.

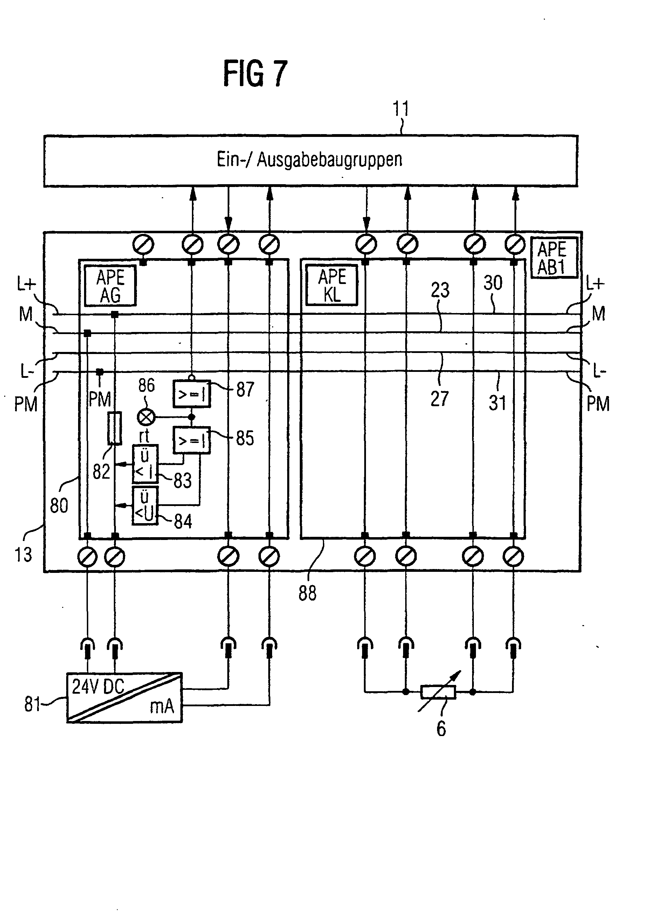

Nach Figur 7 wird das Anpaßelement für einen Analoggeber derart ausgeführt, daß ein Meßumformer 81 über eine siebente Sicherung 82 mit der Leitung 30 für positive Gleichspannung verbunden ist, wobei die Leitungen durch eine zweite Stromüberwachungseinrichtung 84 und eine fünfte Spannungsüberwachungseinrichtung 83 überwacht werden, die im Fehlerfall über ein viertes Oder-Glied 85 eine vierte rote Leuchtdiode 86 aufleuchten lassen und über ein drittes Invertierglied 87 eine logische 0 an die Ein-Ausgabebaugruppe 8 liefern. Ebenfalls in Figur 7 ist ein Anpaßelement 88 als Klemmenmodul, welches die Aufgabe hat, ohne weitere Beieinflussung die Signale von einem peripheren Element 6 weiterzuleiten.

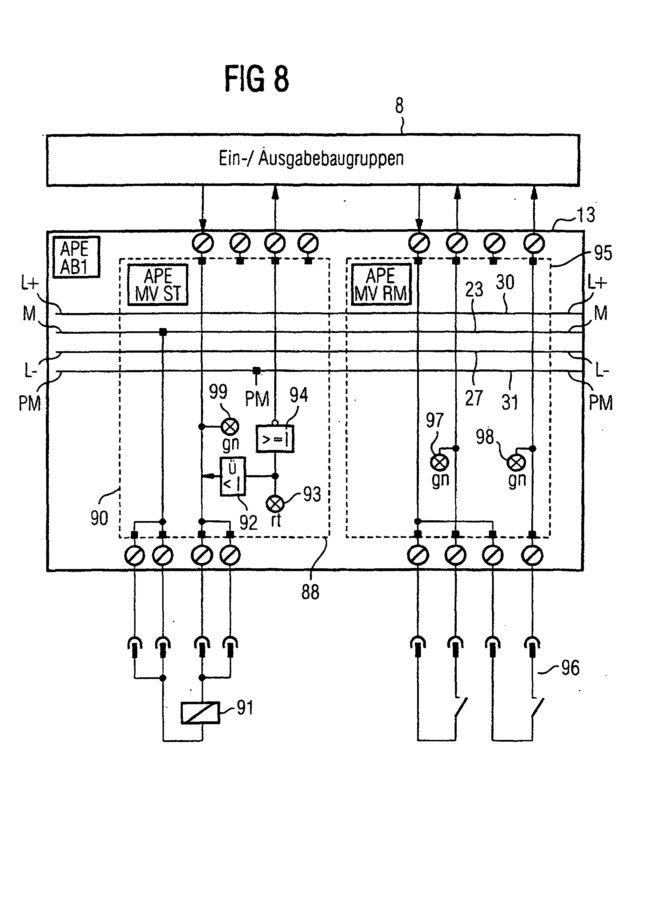

In Figur 8 ist ein Anpaßelement 90 für die Steuerung eines Magnetventils 91 dargestellt, welches die Leitung zur Steuerung des Magnetventils 91 über eine siebente grüne Leuchtdiode 97 mithilfe einer dritten Stromüberwachungseinrichtung 92 überwacht, die im Fehlerfall eine fünfte rote Leuchtdiode 93 zum Aufleuchten bringt und über ein viertes Invertierglied 94 eine logische 0 an die Ein-Ausgabebaugruppe 8 weiterleitet. Ein Anpaßelement 95 für Rückmeldungen von Schaltern 96 von Magnetventilen 91 ist ebenfalls dargestellt, dabei zeigen ein siebente und eine achte grüne Leuchtdiode 98,99 die Stellung des Magnetventils an.

## Patentansprüche

1. Periphere Steuereinheit (4) mit mindestens einem dezentralen Signalmodul (8), mit mindestens einem zugeordneten peripheren Steuerelement (6) und mit einem Leitungssystem zur bidirektionalen Kommunikation zwischen dem Signalmodul (8) und dem peripheren Steuerelement (6), wobei die periphere Steuereinheit (4) einem Prozeßleitsystem zur Steuerung des peripheren Steuerelementes (6) durch einen Automatisierungsprozessor (5) zuordenbar ist,
**dadurch gekennzeichnet,**
**daß** die periphere Steuereinheit ein Anpaßelement (12) aufweist, welches eingangsseitig mit dem Signalmodul (8) und ausgangsseitig mit dem peripheren Steuerelement (6) verbunden ist,
wobei das Anpaßelement (12) eine individuelle Stromversorgungseinrichtung (18), Überwachungseinrichtungen für das periphere Steuerelement (6) und Anzeigevorrichtungen zum Anzeigen von Funktionszuständen des peripheren Steuerelementes (6) aufweist.

2. Periphere Steuereinheit (4) nach Anspruch 2,
**dadurch gekennzeichnet,**
**daß** die Überwachungseinrichtungen Spannungsüberwachungseinrichtungen aufweisen, die das Leitungssystem auf anliegende Spannung überwachen.

3. Periphere Steuereinheit (4) nach einem der Ansprüche 1 oder 2,
**dadurch gekennzeichnet,**
**daß** die Überwachungsvorrichtungen Stromüberwachungseinrichtungen aufweisen, die das Leitungssystem auf Stromfluß überwachen.

4. Periphere Steuereinheit (4) nach einem der Ansprüche 1, 2 oder 3
**dadurch gekennzeichnet,**
**daß** die Anzeigevorrichtungen als grüne Leuchtdioden (z.B. 26) und/oder rote Leuchtdioden (z.B. 50) ausgebildet sind.

5. Periphere Steuereinheit (4) nach einem der Ansprüche 1 bis 4,
**dadurch gekennzeichnet,**
**daß** ein Anschlußblock (13) mit Leitungen vorgesehen ist, die das Anpaßelement (12) mit der Stromversorgungseinrichtung (18) verbinden.

6. Periphere Steuereinheit (4) nach Anspruch 5,
**dadurch gekennzeichnet,**
**daß** das Anpaßelement (12) auf den Anschlußblock (13) steckbar ausgebildet ist.

7. Periphere Steuereinheit (4) nach einem der Ansprüche 1 bis 6,
**dadurch gekennzeichnet,**
**daß** das periphere Steuerelement (6) als Binärsignalgeber (42) ausgebildet ist,
**daß** der Binärsignalgeber über das Anpaßelement (41) so an die Stromversorgungseinrichtung (18) angeschlossen ist, daß sich eine positive Gleichspannung (30) und eine negative Gleichspannung (27) der Stromversorgungseinrichtung (18) zu einer Schaltspannung für den Binärsignalgeber (42) verknüpfen lassen.

8. Periphere Steuereinheit (4) nach einem der Ansprüche 1 bis 6,
**dadurch gekennzeichnet,**
**daß** das periphere Steuerelement (6) als Stellantrieb mit zugeordneten Kontaktschaltern (53,54,55,56) und mit einem zugeordneten ersten Kopplerrelais (63) ausgebildet ist und
**daß** das Anpaßelement () Mittel zum Überwachen der Stellung der Kontaktschalter (53,54,55,56) sowie Mittel zum Schalten des ersten Kopplerrelais (63) in Abhängigkeit der Stellung der Kontaktschalter (53,54,55,56) aufweist.

9. Periphere Steuereinheit (4) nach einem der Ansprüche 1 bis 6,
**dadurch gekennzeichnet,**
**daß** das periphere Steuerelement (6) als Antriebssteuerung mit zugeordneten Kontakten (66) und mit einem zugeordneten zweiten Kopplerrelais (76) ausgebildet ist und
**daß** das Anpaßelement (12) eine vierte Spannungsüberwachungseinrichtung (67) zur Überwachung des Stromes der Kontakte (66) sowie Mittel zum Abschalten und zum Rücksetzen des zweiten Kopplerrelais (76) aufweist.

10. Periphere Steuereinheit (4) nach einem der Ansprüche 5 oder 6,
**dadurch gekennzeichnet,**
**daß** das Anpaßelement (17) zur Stromversorgung eingangsseitig Anschlüsse mit einer externen Stromversorgungseinrichtung (18) für die Versorgung mit einer positiven Gleichspannung, mit einer negativen Gleichspannung und einen Masseanschluß sowie ausgangsseitig Anschlüsse mit den Leitungen (23,27,30,31) des Anschlußblocks (13) zur Verteilung der Spannung an weitere Anpaßelemente (12) aufweist.

## Claims

1. Peripheral control unit (4) having at least one local signal module (8), having at least one associated peripheral control element (6) and having a wiring system for bidirectional communication between the signal module (8) and the peripheral control element (6), the peripheral control unit (4) being able to be assigned to a process control system for controlling the peripheral control element (6) by an automation processor (5),
**characterized**
**in that** the peripheral control unit has an alignment element (12) whose input side is connected to the signal module (8) and whose output side is connected to the peripheral control element (6),
the alignment element (12) having an individual power supply device (18), monitoring devices for the peripheral control element (6) and display apparatuses for displaying operating states of the peripheral control element (6).

2. Peripheral control unit (4) according to Claim 2,
**characterized**
**in that** the monitoring devices have voltage monitoring devices which monitor the wiring system for applied voltage.

3. Peripheral control unit (4) according to either of Claims 1 and 2,
**characterized**
**in that** the monitoring apparatuses have current monitoring devices which monitor the wiring system for current flow.

4. Peripheral control unit (4) according to one of Claims 1, 2 and 3,
**characterized**
**in that** the display apparatuses are in the form of green light-emitting diodes (e.g. 26) and/or red light-emitting diodes (e.g. 50).

5. Peripheral control unit (4) according to one of Claims 1 to 4,
**characterized**
**in that** a connection block (13) having lines which connect the alignment element (12) to the power supply device (18) is provided.

6. Peripheral control unit (4) according to Claim 5,
**characterized**
**in that** the alignment element (12) is designed to be able to be plugged onto the connection block (13).

7. Peripheral control unit (4) according to one of Claims 1 to 6,
**characterized**
**in that** the peripheral control element (6) is in the form of a binary signal generator (42),
**in that** the binary signal generator is connected to the power supply device (18) via the alignment element (41) such that a positive DC voltage (30) and a negative DC voltage (27) from the power supply device (18) can be logically combined to form a switching voltage for the binary signal generator (42).

8. Peripheral control unit (4) according to one of Claims 1 to 6,
**characterized**
**in that** the peripheral control element (6) is in the form of a servo drive having associated contact switches (53, 54, 55, 56) and having an associated first coupling relay (63), and
**in that** the alignment element ([lacuna]) has means for monitoring the position of the contact switches (53, 54, 55, 56) and means for switching the first coupling relay (63) on the basis of the position of the contact switches (53, 54, 55, 56).

9. Peripheral control unit (4) according to one of Claims 1 to 6,
**characterized**
**in that** the peripheral control element (6) is in the form of an actuation controller having associated contacts (66) and having an associated second coupling relay (76), and
**in that** the alignment element (12) has a fourth voltage monitoring device (67) for monitoring the current in the contacts (66) and also means for disconnecting and for resetting the second coupling relay (76).

10. Peripheral control unit (4) according to either of Claims 5 and 6,
**characterized**
**in that** the alignment element (17) for power supply has, on the input side, connections to an external power supply device (18) for supplying a positive DC voltage, a negative DC voltage, and an earth connection and also, on the output side, connections to the lines (23, 27, 30, 31) in the connection block (13) for distributing the voltage to further alignment elements (12) .

## Revendications

1. Unité de commande périphérique (4) comportant au moins un module de signal décentralisé (8), au moins un élément de commande périphérique associé (6) et un système de lignes destiné à la communication bidirectionnelle entre le module de signal (8) et l'élément de commande périphérique (6), l'unité de commande périphérique (4) pouvant être associée à un système de régulation de processus en vue de commander l'élément de commande périphérique (6) via un processeur d'automatisation (5), **caractérisée en ce que** l'unité de commande périphérique comporte un élément d'adaptation (12) qui est relié du côté de l'entrée au module de signal (8) et du côté de la sortie à l'élément de commande périphérique (6),
l'élément d'adaptation (12) comportant un dispositif d'alimentation en courant individuel (18), des dispositifs de surveillance pour l'élément de commande périphérique (6) et des dispositifs d'affichage destinés à afficher des états fonctionnels de l'élément de commande périphérique (6).

2. Unité de commande périphérique (4) selon la revendication 2, **caractérisée en ce que** les dispositifs de surveillance comportent des dispositifs de contrôle de tension qui contrôle la tension appliquée au niveau du système de lignes.

3. Unité de commande périphérique (4) selon l'une des revendications 1 ou 2, **caractérisée en ce que** les dispositifs de surveillance comportent des dispositifs de contrôle de courant qui contrôle le courant au niveau du système de lignes.

4. Unité de commande périphérique (4) selon l'une des revendications 1, 2 ou 3, **caractérisée en ce que** les dispositifs d'affichage sont conformés en diodes électroluminescentes vertes (par exemple 26) et/ou en diodes électroluminescentes rouges (par exemple 50).

5. Unité de commande périphérique (4) selon l'une des revendications 1 à 4, **caractérisée en ce qu'**un bloc de raccordement (13) est doté de lignes qui relient l'élément d'adaptation (12) au dispositif d'alimentation en courant (18).

6. Unité de commande périphérique (4) selon la revendication 5, **caractérisée en ce que** l'élément d'adaptation (12) est conformé de façon à pouvoir s'enficher sur le bloc de raccordement (13).

7. Unité de commande périphérique (4) selon l'une des revendications 1 à 6, **caractérisée en ce que** l'élément de commande périphérique (6) est conformé en générateur de signaux binaires (42), **en ce que** le générateur de signaux binaires est raccordé, par l'intermédiaire de l'élément (41) d'adaptation, au dispositif d'alimentation en courant (18) de sorte qu'une tension continue positive (30) et une tension continue négative (27) du dispositif d'alimentation en courant (18) peut être combinée à une tension de commutation pour le générateur de signaux binaires (42).

8. Unité de commande périphérique (4) selon l'une des revendications 1 à 6, **caractérisée en ce que** l'élément de commande périphérique (6) est conformé en servocommande auquel sont associés des interrupteurs de contact (53, 54, 55, 56) et un premier relais (63) de coupleur, et **en ce que** l'élément d'adaptation (41) comporte des moyens de contrôle de la position des interrupteurs de contact (53, 54, 55, 56) ainsi que des moyens de commutation du premier relais de coupleur (63) en fonction de la position des commutateur de contact (53, 54, 55, 56).

9. Unité de commande périphérique (4) selon l'une des revendications 1 à 6, **caractérisée en ce que** l'élément de commande périphérique (6) est conformé en commande d'entraînement à laquelle sont associés des contacts (66) et un deuxième relais de coupleur (76), et **en ce que** l'élément d'adaptation (12) comporte un quatrième dispositif de contrôle de tension (67) destiné à contrôler le courant des contacts (66) ainsi que des moyens de déconnexion et de réinitialisation du deuxième relais de coupleur (76).

10. Unité de commande périphérique (4) selon l'une des revendications 5 ou 6, **caractérisée en ce que** l'élément d'adaptation (17) comporte, en vue de l'alimentation en courant, du côté de l'entrée, des bornes de raccordement à un dispositif externe d'alimentation en courant (18) destiné à l'alimentation avec une tension continue positive, avec une tension continue négative, et une borne de masse, ainsi que, du côté de la sortie, des bornes de raccordement à des lignes (23, 27, 30, 31) du bloc de bornes (13) en vue de distribuer la tension à d'autres éléments d'adaptation (12).
